# EUROPEAN PATENT APPLICATION

(11) **EP 4 629 326 A1**
(43) Date of publication of application: **08.10.2025**
(21) Application number: 23920639.4
(22) Date of filing: 25.04.2023
(51) Int. Cl.: H01M 4/36

(54) **POSITIVE ELECTRODE MATERIAL, AND PREPARATION METHOD THEREFOR AND USE THEREOF**

(30) Priority: 07.02.2023 CN 202310071909
(71) Applicant: Eve Power Co., Ltd., Jingmen, Hubei 448000 (CN)
(72) Inventor: HU, Qi, Jingmen, Hubei 448000 (CN); ZHOU, Cong, Jingmen, Hubei 448000 (CN); LI, Si, Jingmen, Hubei 448000 (CN); ZENG, Hanmin, Jingmen, Hubei 448000 (CN); HE, Wei, Jingmen, Hubei 448000 (CN); LIU, Jincheng, Jingmen, Hubei 448000 (CN)
(74) Representative: Prinz & Partner mbB
(86) International application number: PCT/CN2023/090500
(87) International publication number: WO 2024/164440

(57) **Abstract**

Provided in the present application are a positive electrode material, and a preparation method therefor and the use thereof. The chemical formula of the positive electrode material is xLi₂MnO₃·(1-x-y)LiNiₐT_{M(1-a)}O₂·yLiMn_{b}A_{(1-b)}PO₄, wherein O < x < 1, 0 < y <1, 0 ≤ a ≤ 1, 0.5 ≤ b ≤ 1, and T_{M} and A respectively and independently comprise a metal element. The positive electrode material can form continuous phase transformation, has a super-domain structure and a stable layered structure, and can stabilize lattice oxygen and reduce voltage drop, such that the cycling performance of a battery under a high voltage can be significantly improved.

## Description

This application claims priority to Chinese Patent Application No. 202310071909.5 filed with CNIPA on February 7, 2023, the disclosure of which is incorporated herein by reference in its entirety.

### TECHNICAL FIELD

The present application belongs to the technical field of batteries, such as a cathode material, and a preparation method therefor and use thereof.

### BACKGROUND

Manganese-based cathode materials for lithium batteries include lithium manganese oxide LiMnO₂, spinel lithium manganese oxide LiNi_{0.5}Mn_{1.5}O₄ and lithium-rich manganese-based Li[Li_{1/3}Mn_{2/3}]O₂, wherein the lithium-rich manganese-based cathode materials has attracted extensive attention due to their high capacity. However, such cathode materials requires the voltage of 4.4 V or higher to achieve a high capacity, and has the problems of lattice oxygen evolution and large voltage drop, and thereby its cycling performance is poor and will further deteriorate at high temperatures. Conventional element doping schemes in the art have difficulties in effectively modifying the lithium-rich manganese-based materials, which cannot reduce voltage drop or stabilize lattice oxygen.

For example, CN 112701273A disclosed a preparation method for a fluorine-doped lithium-rich manganese-based cathode material, and the lithium-rich manganese-based cathode material has a chemical formula: xLi₂MnO₃·(1-x)LiMO_{2-y}F_{2y}, wherein 0.1 ≤ x ≤ 0.9, 0 < y ≤ 0.05, and the M is one or more of Ni, Co, Mn, Cr, Fe, Ti, Mo, Ru, V, Nb, Zr and Sn; the preparation method includes the steps: a soluble metal salt, a precipitant, a soluble fluorine-containing compound and water are used to prepare a fluorine-doped lithium-rich manganese-based precursor through a precipitation reaction; the fluorine-doped lithium-rich manganese-based precursor is evenly mixed with a lithium salt, and subjected to pre-sintering and high-temperature sintering to give the fluorine-doped lithium-rich manganese-based cathode material; the fluorine-doped lithium-rich manganese-based cathode material uses the soluble fluorine-containing compound as the fluorine source to achieve fluorine doping during the co-precipitation of the lithium-rich manganese-based precursor; the cycling performance of the doped lithium-rich material is improved, but the problems of lattice oxygen evolution and large voltage drop of lithium-rich manganese-based materials are not solved.

Based on the above research, it is necessary to provide a cathode material that can stabilize lattice oxygen, obtain a stable layered structure, reduce the voltage drop, and improve the cycling stability of the lithium-rich manganese-based material at a high voltage.

### SUMMARY

The following is a summary of subject matter that is described in detail herein. This summary is not intended to be limiting as to the scope of the claims.

The present application provides a cathode material, and a preparation method therefor and use thereof, and specifically provides a hyper-lithiation manganese-based cathode material, and a preparation method therefor and use thereof. The cathode material can form a continuous phase transition, and has a super-crystalline domain structure and a stable layered structure, which can stabilize the lattice oxygen, reduce the voltage drop, and significantly improve the cycling performance of the cathode material at a high voltage.

The following solutions are adopted in the present application.

In a first aspect, an embodiment of the present application provides a cathode material, and the cathode material has a chemical formula of xLi₂MnO₃·(1-x-y)LiNiₐT_{M(1-a)}O₂·yLiMn_{b}A₍₁-_{b)}PO₄, wherein 0 < x < 1, 0 < y < 1, 0 ≤ a ≤ 1, 0.5 ≤ b ≤ 1, and T_{M} and A each independently include a metal element.

The cathode material in an embodiment of the present application is a solid solution material; the lithium-rich manganese-based material is composed of Li₂MnO₃ phase and LiNiₐT_{M(1-a)}O₂ phase, and the lattice oxygen is mainly derived from the Li₂MnO₃ phase; on one hand, the evolution of lattice oxygen is caused by the instability of lattice oxygen under high voltage and high delithiation state, and on the other hand, the large lattice distortion caused by the different phase transition points of the two phases further leads to the instability of lattice oxygen and the evolution of lattice oxygen during the long-term cycling process. Therefore, in an embodiment of the present application, a third lithiation compound, LiMn_{b}A_{(1-b)}PO₄, is introduced into the lithium-rich manganese-based material to form a hyper-lithiation manganese-based cathode material, and the lithiation compound can form a super-crystalline domain structure with Li₂MnO₃ phase and LiNiₐT_{M(1-a)}O₂ phase; during the charging-discharging process within a voltage range of 3.8-4.4 V, LiMn_{b}A_{(1-b)}PO₄ finishes the phase transition, and thus the Li₂MnO₃ phase and the LiNiₐT_{M(1-a)}O₂ phase can form a continuous phase transition, so as to stabilize the lattice oxygen, stabilize the layered structure, reduce the voltage drop, and improve the cycling stability of the manganese-based material at a high voltage.

For the 0 < x < 1, for example, x may be 0.05, 0.1, 0.2, 0.3, 0.4, 0.5, 0.6, 0.7, 0.8, 0.9 or 0.95, but is not limited to the listed values, and other unlisted values within the numerical range are also applicable.

For the 0 < y < 1, for example, y may be 0.05, 0.1, 0.2, 0.3, 0.4, 0.5, 0.6, 0.7, 0.8, 0.9 or 0.95, but is not limited to the listed values, and other unlisted values within the numerical range are also applicable, and preferably, 0 < y ≤ 0.3.

In an embodiment of the present application, the proportion of LiMn_{b}A_{(1-b)}PO₄ not only affects the stability of lattice oxygen and the lattice distortion, but also affects the overall capacity of the material.

For the 0 ≤ a ≤ 1, for example, a may be 0, 0.1, 0.2, 0.3, 0.4, 0.5, 0.6, 0.7, 0.8, 0.9 or 1, and for the 0.5 ≤ b ≤ 1, for example, b may be 0.5, 0.6, 0.7, 0.8, 0.9 or 1, but a and b are not limited to the listed values, and other unlisted values within the numerical ranges are also applicable.

In one embodiment, T_{M} includes any one or a combination of at least two of Mn, Ni, Co, Al, Ti, W, Nb, Zr, Y, Sr or Fe; a typical but non-limiting combination includes a combination of Mn and Ni, or a combination of Co and Al.

In one embodiment, A includes any one or a combination of at least two of Ni, V, Mg, Al, Nb, Zr, Cr, Si, Zn, Ti, Co or Fe; a typical but non-limiting combination includes a combination of Ni and V, or a combination of Mg and Al.

In a second aspect, an embodiment of the present application provides a preparation method for the cathode material as described in the first aspect, and the preparation method includes the following steps:
(1) mixing and drying a lithium source, a precursor of LiNiₐTu₍₁₋ₐ₎O₂, and LiMn_{b}A_{(1-b)}PO₄ to obtain raw powder of the cathode material; and
(2) sintering the raw powder of the cathode material obtained in step (1) to obtain the cathode material.

The cathode material obtained in an embodiment of the present application is prepared from raw materials of a lithium source, a precursor of LiNiₐTu₍₁₋ₐ₎O₂, and LiMn_{b}A_{(1-b)}PO₄, which can form a solid solution material with different phases uniformly distributed, and form a super-crystalline domain structure at the micro level.

In one embodiment, LiMn_{b}A_{(1-b)}PO₄ is in the form of sol-gel solution to be mixed with the lithium source and the precursor of LiNiₐT_{M(1-a)}O₂ in step (1).

In the preparation of the cathode material in an embodiment of the present application, the lithium source and the precursor of LiNiₐT_{M(1-a)}O₂ is mixed with the sol-gel solution of LiMn_{b}A_{(1-b)}PO₄; LiMn_{b}A_{(1-b)}PO₄ in the sol-gel state, on one hand, is conducive to the formation of LiMn_{b}Ni_{(1-b)}PO₄ nanopowder, and on the other hand, can be well mixed with the precursor and lithium source, which is conducive to the formation of super-crystalline domain structure by LiMn_{b}Ni_{(1-b)}PO₄ and other phases in the sintering process.

In one embodiment, the sol-gel solution of LiMn_{b}A_{(1-b)}PO₄ is prepared by the following method:
mixing a lithium source, a manganese source, a phosphorus source, a metal A source and a solvent according to a formula amount, then adding an acid and a chelating agent, and stirring to obtain the sol-gel solution of LiMn_{b}A_{(1-b)}PO₄.

In one embodiment, a mixed solution obtained by mixing the lithium source, the manganese source, the phosphorus source, the element A source and the solvent according to the formula amount has a concentration of 0.1-1 mol/L; for example, the concentration may be 0.1 mol/L, 0.3 mol/L, 0.5 mol/L, 0.7 mol/L, 0.9 mol/L or 1 mol/L, but is not limited to the listed values, and other unlisted values within the numerical range are also applicable.

In one embodiment, a concentration of the acid is 0.1-1 mol/L; for example, the concentration may be 0.1 mol/L, 0.3 mol/L, 0.5 mol/L, 0.7 mol/L, 0.9 mol/L or 1 mol/L, but is not limited to the listed values, and other unlisted values within the numerical range are also applicable.

In one embodiment, the acid includes any one or a combination of at least two of citric acid, salicylic acid, oxalic acid or EDTA (ethylenediaminetetraacetic acid), and a typical but non-limiting combination includes a combination of citric acid and salicylic acid.

In one embodiment, a concentration of the chelating agent is 1-2 mol/L; for example, the concentration may be 1 mol/L, 1.5 mol/L or 2 mol/L, but is not limited to the listed values, and other unlisted values within the numerical range are also applicable.

In one embodiment, the chelating agent includes polyethylene glycol.

In one embodiment, the stirring is performed at a temperature of 25-50°C; for example, the temperature may be 25°C, 30°C, 40°C or 50°C, but is not limited to the listed values, and other unlisted values within the numerical range are also applicable.

In one embodiment, the drying in step (1) is performed in a manner of spray drying.

The manner of spray drying is adopted in an embodiment of the present application; on one hand, spray granulation can be used to form a precursor with a higher specific surface area, and on the other hand, the lithium source and the precursor can be uniformly mixed, so that the synthesized hyper-lithiation manganese-based material has more uniform distribution of Li₂MnO₃ phase and LiTuO₂ phase.

In one embodiment, the spray drying is performed at a temperature of 100-300°C; for example, the temperature may be 100°C, 150°C, 200°C, 250°C or 300°C, but is not limited to the listed values, and other unlisted values within the numerical range are also applicable.

Since the time of spray drying is related to the size of the equipment, the time of spray drying is not specifically limited in the embodiment of the present application, and can be selected within 30 s-2 min; for example, the time may be 30 s, 1 min or 2 min, but is not limited to the listed values, and other unlisted values within the numerical range are also applicable.

In one embodiment, a molar ratio of lithium ions to T_{M} ions in a mixture obtained by the mixing in step (1) is (1.20-1.36):1; for example, the molar ratio may be 1.20:1, 1.3:1 or 1.36:1, but is not limited to the listed values, and other unlisted values within the numerical range are also applicable.

In one embodiment, a molar percentage of LiMn_{b}A_{(1-b)}PO₄ in a mixture obtained by the mixing in step (1) is 0.01-30%; for example, the molar percentage may be 0.2%, 1%, 5%, 10%, 15%, 20%, 25% or 30%, but is not limited to the listed values, and other unlisted values within the numerical range are also applicable.

In one embodiment, the mixing in step (1) is performed until a particle size D50 of the mixture is 0.2-1.5 µm; for example, the particle size D50 may be 0.2 µm, 0.5 µm, 1.0 µm or 1.5 µm, but is not limited to the listed values, and other unlisted values within the numerical range are also applicable.

In one embodiment, the manner of the mixing includes ball milling.

In one embodiment of the present application, the mixture is first subjected to ball milling to obtain a particle size within 0.2-1.5 µm, and then to spray drying. Evenly mixing the two materials helps to form a composite phase in the subsequent sintering process; if the particle size is overly small, lots of particles will be wasted during the spray process, thus the yield of the raw powder will reduce and the production efficiency will be affected; if the particle size is further smaller, the obtained particles will be difficult to sinter and tend to grow abnormally, leading to uneven composition distribution; if the particle size is overly large, the two materials will be difficult to mix uniformly, causing the segregation of the other material, which is not conducive to the formation of the super-crystalline domain structure.

In one embodiment, the precursor of LiNiₐT_{M(1-a)}O₂ in step (1) includes NiaMn₍₁₋ₐ₎(OH)₂, which is prepared by the following method:
mixing a precipitant, a complexant, and a Ni and/or T_{M} metal source to obtain a reaction solution, and then subjecting the reaction solution to a reaction to obtain the precursor of LiNiₐT_{M(1-a)}O₂.

In one embodiment, a pH of the reaction solution is 7-12; for example, the pH may be 7, 8, 9, 10, 11 or 12, but is not limited to the listed values, and other unlisted values within the numerical range are also applicable.

In one embodiment, a concentration of complex ions in the reaction solution is 0.1-1 mol/L; for example, the concentration may be 0.1 mol/L, 0.5 mol/L or 1 mol/L, but is not limited to the listed values, and other unlisted values within the numerical range are also applicable.

In one embodiment, the reaction is performed at a temperature of 40-60°C; for example, the temperature may be 40°C, 50°C or 60°C, but is not limited to the listed values, and other unlisted values within the numerical range are also applicable.

In one embodiment, the reaction is performed until a particle size of the precursor is 3-10 µm; for example, the particle size may be 3 µm, 5 µm, 7 µm, 9 µm or 10 µm, but is not limited to the listed values, and other unlisted values within the numerical range are also applicable.

In one embodiment, a concentration of the complexant is 0.1-1 mol/L; for example, the concentration may be 0.1 mol/L, 0.5 mol/L or 1 mol/L, but is not limited to the listed values, and other unlisted values within the numerical range are also applicable; the complexant includes NH₄OH.

In one embodiment, a concentration of the precipitant is 0.1-2 mol/L; for example, the concentration may be 0.1 mol/L, 0.5 mol/L, 1 mol/L, 1.5 mol/L or 2 mol/L, but is not limited to the listed values, and other unlisted values within the numerical range are also applicable; the precipitant includes sodium hydroxide.

In one embodiment, the precipitant, the complexant and the Ni and/or T_{M} metal source flow into a reaction kettle in parallel in the solution form for reaction; a concentration of the metal source in the Ni and/or T_{M} metal source is 0.1-2 mol/L; for example, the concentration may be 0.1 mol/L, 0.5 mol/L, 1 mol/L, 1.5 mol/L or 2 mol/L, but is not limited to the listed values, and other unlisted values within the numerical range are also applicable.

In one embodiment, the sintering in step (2) is performed at a temperature of 800-1000°C for a period of 24-48 h; for example, the temperature may be 800°C, 900°C or 1000°C, the period may be 24 h, 36 h or 48 h, but the temperature and the period are not limited to the listed values, and other unlisted values within the numerical ranges are also applicable.

In one embodiment, crushing and screening with magnetic impurities removed are further performed after the sintering in step (2).

In one embodiment, a particle size D50 of the cathode material in step (2) is 2-5 µm; for example, the particle size may be 2 µm, 3 µm, 4 µm or 5 µm; a size of primary particles is within 0.4-2 µm, which refers to the minimum size of the primary particles being 0.4 µm or more; for example, the size may be 0.4 µm, 0.5 µm or 0.4 µm; the maximum size of the primary particles is 5 µm or less; for example, the size may be 5 µm, 4.5 µm or 4 µm; but the size is not limited to the listed values, and other unlisted values within the numerical range are also applicable.

In an embodiment of the present application, the lithium source includes lithium carbonate and/or lithium nitrate; the phosphorus source includes, but is not limited to, ammonium hydrogen phosphate; and the manganese source includes, but is not limited to, manganese nitrate.

As an optional technical solution for the preparation method in an embodiment of the present application, the preparation method includes the following steps:
(1) mixing a sol-gel solution of LiMn_{b}A_{(1-b)}PO₄, a precursor of LiNiₐT_{M(1-a)}O₂ and a lithium source by ball milling until a particle size of the mixture is 0.2-1.5 µm, and subjecting the mixture to spray drying at 100-300°C to obtain raw powder of the cathode material, wherein in the mixture, a molar ratio of lithium ions to T_{M} ions is (1.20-1.36):1 and a molar percentage of LiMn_{b}A_{(1-b)}PO₄ is 0.01-30%;
   the precursor of LiNiₐTu₍₁₋ₐ₎O₂ is NiₐMn₍₁₋ₐ₎(OH)₂, and the sol-gel solution of LiMn_{b}A_{(1-b)}PO₄ is prepared by the following method:
   mixing a lithium source, a manganese source, a phosphorus source, a metal A source and a solvent according to a formula amount to obtain a mixed solution with a concentration of 0.1-1 mol/L, then adding an acid and a chelating agent to the mixed solution and stirring to obtain the sol-gel solution of LiMn_{b}A_{(1-b)}PO₄; and
(2) subjecting the raw powder of the cathode material obtained in step (1) to sintering at a temperature of 800-1000°C, then crushing, and screening with magnetic impurities removed to obtain the cathode material with a particle size D50 of 2-5 µm and primary particles having a size distributed within the range of 0.4-2 µm.

In a third aspect, an embodiment of the present application provides a lithium-ion battery, and the lithium-ion battery comprises the cathode material as described in the first aspect.

The present application has the following beneficial effects:
in the present application, a third lithiation compound is introduced into the lithium-rich manganese-based material to form a hyper-lithiation manganese-based cathode material, and thus LiMn_{b}A_{(1-b)}PO₄ can form a super-crystalline domain structure having continuous phase transition with the two phases in the manganese-based material, thereby stabilizing the Li₂MnO₃ phase, reducing the evolution of lattice O, reducing the voltage drop, and improving the cycling performance under high voltage; at the same time, the present application adopts a specific preparation method, and by using specific raw materials combined with spray drying, a solid solution material with three phases uniformly distributed can be obtained; hence, different phases are uniformly distributed, and also the cathode material forms a super-crystalline domain structure.

Other aspects will be appreciated upon reading and understanding the detailed description.

### DETAILED DESCRIPTION

### Example 1

This example provides a cathode material, and the chemical formula of the cathode material is 0.2Li₂MnO₃·0.55LiNi_{0.5}Mn_{0.5}O₂·0.25LiMn_{0.7}V_{0.3}PO₄;
The preparation method for the cathode material includes the following steps:
(1) the sol-gel solution of LiMn_{0.7}V_{0.3}PO₄, Li₂CO₃, and Ni_{0.5}Mn_{0.5}(OH)₂ were mixed by ball milling until the particle size D50 of the mixture was 1.0 µm, and then the mixture was subjected to spray drying at 200°C for 1 min to obtain raw powder of the cathode material, wherein in the mixture, the molar ratio of lithium ions to T_{M} ions was 1.3:1 and the molar percentage of LiMn_{0.7}V_{0.3}PO₄ was 25%;
   the sol-gel solution of LiMn_{0.7}V_{0.3}PO₄ was prepared by the following method:
   LiNO₃, vanadium nitrate, Mn(NO₃)₂, NH₄H₂PO₄ and distilled water were mixed according to the formula amount to obtain a mixed solution with a concentration of 0.5 mol/L, then citric acid with a concentration of 0.5 mol/L and polyethylene glycol with a concentration of 1.5 mol/L were added to the mixed solution and stirred at 40°C to obtain the sol-gel solution of LiMn_{0.7}V_{0.3}PO₄;
   the Ni_{0.5}Mn_{0.5}(OH)₂ was prepared by the following method:
      the mixed solution of manganese sulfate and nickel sulfate with a concentration of 1 mol/L, sodium hydroxide solution with a concentration of 1.2 mol/L, and ammonia water with a concentration of 0.5 mol/L were introduced into a reaction kettle in parallel, the pH was controlled to 10, and a reaction was carried out at a temperature of 50°C until Ni_{0.5}Mn_{0.5}(OH)₂ with a particle size D50 of 7 µm was obtained; and
(2) the raw powder of cathode material obtained in step (1) was sintered at 900°C for 36 h, then crushed, and screened with magnetic impurities removed to give the cathode material with a particle size D50 of 4 µm and primary particles having a size distributed within the range of 0.4-2 µm.

### Example 2

This example provides a cathode material, and the chemical formula of the cathode material is 0.25Li₂MnO₃·0.65LiNi_{0.5}Mn_{0.5}O₂·0.1LiMn_{0.7}V_{0.3}PO₄;
The preparation method for the cathode material includes the following steps:
(1) the sol-gel solution of LiMn_{0.7}V_{0.3}PO₄, Li₂CO₃, and Ni_{0.5}Mn_{0.5}(OH)₂ were mixed by ball milling until the particle size D50 of the mixture was 0.2 µm, and then the mixture was subjected to spray drying at 100°C for 2 min to obtain raw powder of the cathode material, wherein in the mixture, the molar ratio of lithium ions to T_{M} ions was 1.36:1 and the molar percentage of LiMn_{0.7}V_{0.3}PO₄ was 10%;
   the sol-gel solution of LiMn_{0.7}V_{0.3}PO₄ was prepared by the following method:
   LiNO₃, vanadium nitrate, Mn(NO₃)₂, NH₄H₂PO₄ and distilled water were mixed according to the formula amount to obtain a mixed solution with a concentration of 1 mol/L, then citric acid with a concentration of 1 mol/L and polyethylene glycol with a concentration of 2 mol/L were added to the mixed solution and stirred at 50°C to obtain the sol-gel solution of LiMn_{0.7}V_{0.3}PO₄;
   the Ni_{0.5}Mn_{0.5}(OH)₂ was prepared by the following method:
      the mixed solution of manganese sulfate and nickel sulfate with a concentration of 0.1 mol/L, sodium hydroxide solution with a concentration of 2 mol/L, and ammonia water with a concentration of 0.1 mol/L were introduced into a reaction kettle in parallel, the pH was controlled to 12, and a reaction was carried out at a temperature of 40°C until Ni_{0.5}Mn_{0.5}(OH)₂ with a particle size D50 of 10 µm was obtained; and
(2) the raw powder of cathode material obtained in step (1) was sintered at 800°C for 48 h, then crushed, and screened with magnetic impurities removed to give the cathode material with a particle size D50 of 2 µm and primary particles having a size distributed within the range of 0.5-1.5 µm.

### Example 3

This example provides a cathode material, and the chemical formula of the cathode material is 0.25Li₂MnO₃·0.65LiMn_{0.5}Ni_{0.5}O₂·0.1LiMn_{0.7}Ni_{0.3}PO₄;
The preparation method for the cathode material includes the following steps:
(1) the sol-gel solution of LiMn_{0.7}Ni_{0.3}PO₄, Li₂CO₃, and Ni_{0.5}Mn_{0.5}(OH)₂ were mixed by ball milling until the particle size D50 of the mixture was 1.5 µm, and then the mixture was subjected to spray drying at 300°C for 30 s to obtain raw powder of the cathode material, wherein in the mixture, the molar ratio of lithium ions to T_{M} ions was 1.20:1 and the molar percentage of LiMn_{0.7}Ni_{0.3}PO₄ was 10%;
   the sol-gel solution of LiMn_{0.7}Ni_{0.3}PO₄ was prepared by the following method:
   LiNO₃, nickel nitrate, Mn(NO₃)₂, NH₄H₂PO₄ and distilled water were mixed according to the formula amount to obtain a mixed solution with a concentration of 0.1 mol/L, then EDTA with a concentration of 0.1 mol/L and polyethylene glycol with a concentration of 1 mol/L were added to the mixed solution and stirred at 25°C to obtain the sol-gel solution of LiMn_{0.7}Ni_{0.3}PO₄;
   the Ni_{0.5}Mn_{0.5}(OH)₂ was prepared by the following method:
      the mixed solution of manganese sulfate and cobalt sulfate with a concentration of 2 mol/L, sodium hydroxide solution with a concentration of 0.1 mol/L, and ammonia water with a concentration of 1 mol/L were introduced into a reaction kettle in parallel, the pH was controlled to 7, and a reaction was carried out at a temperature of 60°C until Ni_{0.5}Mn_{0.5}(OH)₂ with a particle size D50 of 3 µm was obtained; and
(2) the raw powder of cathode material obtained in step (1) was sintered at 1000°C for 24 h, then crushed, and screened with magnetic impurities removed to give the cathode material with a particle size D50 of 5 µm and primary particles having a size distributed within the range of 0.4-2 µm.

### Example 4

This example provides a cathode material, and the cathode material is the same as that of Example 1 except that the chemical formula of the cathode material is 0.2Li₂MnO₃·0.55LiNi_{0.5}Mn_{0.5}O₂·0.25LiMnPO₄;
the preparation method for the cathode material was the same as that of Example 1 except that adaptive changes were made to raw materials according to the chemical formula.

### Example 5

This example provides a cathode material, and the cathode material is the same as that of Example 1 except that the chemical formula of the cathode material is 0.1Li₂MnO₃·0.45LiNi_{0.5}Mn_{0.5}O₂·0.45LiMn_{0.7}V_{0.3}PO₄;
the preparation method for the cathode material was the same as that of Example 1 except that adaptive changes were made to raw materials according to the chemical formula.

### Example 6

This example provides a cathode material, and the chemical formula of the cathode material is 0.2Li₂MnO₃·0.55LiNi_{0.5}Mn_{0.5}O₂·0.25LiMn_{0.7}V_{0.3}PO₄;
the preparation method for the cathode material was the same as that of Example 1 except that the LiMn_{0.7}V_{0.3}PO₄ powder was mixed with Li₂CO₃ and Ni_{0.5}Mn_{0.5}(OH)₂ in step (1), wherein the LiMn_{0.7}V_{0.3}PO₄ powder was obtained by drying and grinding the sol-gel solution in Example 1.

### Example 7

This example provides a cathode material, and the chemical formula of the cathode material is 0.2Li₂MnO₃·0.55LiNi_{0.5}Mn_{0.5}O₂·0.25LiMn_{0.7}V_{0.3}PO₄;
the preparation method for the cathode material was the same as that of Example 1 except that in step (1), the spray drying was not performed, and a blast drying at a temperature of 200°C was performed instead.

### Example 8

This example provides a cathode material, and the chemical formula of the cathode material is 0.2Li₂MnO₃·0.55LiNi_{0.5}Mn_{0.5}O₂·0.25LiMn_{0.7}V_{0.3}PO₄;
the preparation method for the cathode material was the same as that of Example 1 except that in step (1), the particle size D50 of the mixture was 0.05 µm.

### Example 9

This example provides a cathode material, and the chemical formula of the cathode material is 0.2Li₂MnO₃·0.55LiNi_{0.5}Mn_{0.5}O₂·0.25LiMn_{0.7}V_{0.3}PO₄;
the preparation method for the cathode material was the same as that of Example 1 except that in step (1), the particle size D50 of the mixture was 3 µm.

### Example 10

This example provides a cathode material, and the chemical formula of the cathode material is 0.2Li₂MnO₃·0.55LiNi_{0.5}Mn_{0.5}O₂·0.25LiMn_{0.7}V_{0.3}PO₄;
The preparation method for the cathode material includes the following steps:
(1) 0.27Li₂MnO₃·0.73LiNi_{0.5}Mn_{0.5}O₂ and LiMn_{0.7}V_{0.3}PO₄ were mixed by ball milling according to the formula amount until the particle size D50 of the mixture was 1.0 µm, then the mixture was dried at a temperature of 200°C to obtain raw powder of the cathode material; and
(2) the raw powder of the cathode material in step (1) was sintered at a temperature of 900°C, then crushed, and screened with magnetic impurities removed to give the cathode material with a particle size D50 of 4 µm and primary particles having a size distributed within the range of 0.4-2 µm.

### Comparative Example 1

This comparative example provides a cathode material, and the chemical formula of the cathode material is 1/3Li₂MnO₃·2/3LiMn_{0.5}Ni_{0.5}O₂;
the preparation method for the cathode material was the same as that of Example 1 except that the sol-gel solution of LiMn_{0.7}V_{0.3}PO₄ was not added and adaptive changes were made to the additive amounts of raw materials.

### Comparative Example 2

This comparative example provides a cathode material, and the chemical formula of the cathode material is 0.27Li₂MnO₃·0.73LiMn_{0.5}Ni_{0.5}O₂;
the preparation method for the cathode material was the same as that of Example 1 except that the sol-gel solution of LiMn_{0.7}V_{0.3}PO₄ was not added.

The cathode material obtained in the above Examples and Comparative Examples were mixed with conductive carbon black, binder PVDF and NMP to prepare a slurry, then the slurry was coated on an aluminum foil, baked at a temperature of 120°C, and then roller-pressed to prepare a cathode plate, and the cathode plate was assembled with a lithium plate, a separator, and anode and cathode shells to form a button cell for performance tests; the capacity per gram under the condition of 0.1 C and 2.5-4.6 V, the capacity retention rate after 100 cycles of charging and discharging at 45°C, 2.5-4.6 V and 1 C, and the voltage drop after 100 cycles of charging and discharging at 45°C, 2.5-4.6 V and 1 C are shown in Table 1:

**Table 1**

| | Capacity per gram (mAh/g) | Capacity retention rate after 100 cycles (%) | Voltage drop after 100 cycles (mV) |
|---|---|---|---|
| Example 1 | 265 | 95 | 60 |
| Example 2 | 255 | 90 | 90 |
| Example 3 | 250 | 85 | 120 |
| Example 4 | 200 | 90 | 90 |
| Example 5 | 180 | 95 | 40 |
| Example 6 | 235 | 80 | 110 |
| Example 7 | 210 | 80 | 130 |
| Example 8 | 245 | 90 | 90 |
| Example 9 | 220 | 95 | 90 |
| Example 10 | 200 | 80 | 120 |
| Comparative Example 1 | 245 | 70 | 180 |
| Comparative Example 2 | 235 | 80 | 170 |

It can be seen from the above table:
The cathode material in the present application can significantly improve the cycling performance of the battery and reduce the voltage drop. Specifically, it can be seen from Example 1 and Example 4 that the third lithiation compound is preferably doped with metal A element, which can further improve the structural stability of the cathode material and improve the performance of the material; it can be seen from Example 1 and Example 5 that the proportions of the three phases should cooperate with each other, and the proportion of the third lithiation compound within the further preferred range, instead of being overly high, can further ensure the comprehensive electrochemical performance of the material; it can be seen from Example 1 and Examples 6-7 that in the preparation process of the present application, where the sol-gel solution of the third lithiation compound is used as a raw material and combined with spray drying, is not only conducive to uniformly mixed components, but also conducive to the formation of super-crystalline domain structure; it can be seen from Example 1 and Examples 8-9 that by controlling the size of the particles within the preferred range before spray drying, the performance of the material can be further improved; it can be seen from Example 1 and Example 10 that a uniformly distributed solid solution material cannot be obtained by directly mixing various phases, and in the present application, specific raw materials are mixed in the preparation process, which can uniformly distribute each phase and is conducive to the formation of super-crystalline domain structure having continuous phases; it can be seen from Example 1 and Comparative Examples 1-2 that introduction of the third lithiation compound in the present application facilitates the formation of super-crystalline domain structure having continuous phase transition from the two phases of the lithium-rich manganese-based material, thereby reducing the evolution of lattice O and reducing the voltage drop.

**In** summary, the present application provides a cathode material, and a preparation method therefor and use thereof, and especially a hyper-lithiation manganese-based cathode material, and a preparation method therefor and use thereof. The cathode material can form continuous phase transition, and has a super-crystalline domain structure and a stable layered structure, which can stabilize the lattice oxygen, reduce the voltage drop, and significantly improve the cycling performance of the cathode material at a high voltage.

## Claims

1. A cathode material, which has a chemical formula of xLi₂MnO₃·(1-x-y)LiNiₐT_{M(1-a)}O₂·yLiMn_{b}A_{(1-b)}PO₄, wherein 0 < x < 1, 0 < y < 1, 0 ≤ a ≤ 1, 0.5 ≤ b ≤ 1, and T_{M} and A each independently comprise a metal element.

2. The cathode material according to claim 1, wherein T_{M} comprises any one or a combination of at least two of Mn, Ni, Co, Al, Ti, W, Nb, Zr, Y, Sr or Fe.

3. The cathode material according to claim 1 or 2, wherein A comprises any one or a combination of at least two of Ni, V, Mg, Al, Nb, Zr, Cr, Si, Zn, Ti, Co or Fe.

4. The cathode material according to any one of claims 1-3, wherein 0 < y ≤ 0.3.

5. A preparation method for the cathode material according to any one of claims 1-4, which comprises the following steps:
(1) mixing and drying a lithium source, a precursor of LiNiₐTu₍₁₋ₐ₎O₂, and LiMn_{b}A_{(1-b)}PO₄ to obtain raw powder of the cathode material; and
(2) sintering the raw powder of the cathode material obtained in step (1) to obtain the cathode material.

6. The preparation method according to claim 5, wherein in step (1), LiMn_{b}A_{(1-b)}PO₄ is in the form of sol-gel solution to be mixed with the lithium source and the precursor of LiNiₐT_{M(1-a)}O₂.

7. The preparation method according to claim 6, wherein the sol-gel solution of LiMn_{b}A_{(1-b)}PO₄ is prepared by the following method:
mixing a lithium source, a manganese source, a phosphorus source, a metal A source and a solvent according to a formula amount, then adding an acid and a chelating agent, and stirring to obtain the sol-gel solution of LiMn_{b}A_{(1-b)}PO₄.

8. The preparation method according to claim 7, wherein a mixed solution obtained by mixing the lithium source, the manganese source, the phosphorus source, the element A source and the solvent according to the formula amount has a concentration of 0.1-1 mol/L.

9. The preparation method according to claim 7 or 8, wherein a concentration of the acid is 0.1-1 mol/L;
optionally, the acid comprises any one or a combination of at least two of citric acid, salicylic acid, oxalic acid or EDTA.

10. The preparation method according to any one of claims 7-9, wherein a concentration of the chelating agent is 1-2 mol/L;
optionally, the chelating agent comprises polyethylene glycol.

11. The preparation method according to any one of claims 7-10, wherein the stirring is performed at a temperature of 25-50°C.

12. The preparation method according to any one of claims 5-11, wherein the drying in step (1) is performed in a manner of spray drying;
optionally, the spray drying is performed at a temperature of 100-300°C.

13. The preparation method according to any one of claims 5-12, wherein a molar ratio of lithium ions to T_{M} ions in a mixture obtained by the mixing in step (1) is (1.20-1.36):1;
optionally, a molar percentage of LiMn_{b}A_{(1-b)}PO₄ in the mixture obtained by the mixing in step (1) is 0.01-30%.

14. The preparation method according to claims 5-13, wherein the mixing in step (1) is performed until a particle size D50 of a mixture is 0.2-1.5 µm;
optionally, the mixing is performed in a manner comprising ball milling.

15. The preparation method according to claims 5-14, wherein the precursor of LiNiₐT_{M(1-a)}O₂ in step (1) comprises NiₐMn₍₁₋ₐ₎(OH)₂, which is prepared by the following method:
mixing a precipitant, a complexant, and a Ni and/or T_{M} metal source to obtain a reaction solution, and then subjecting the reaction solution to a reaction to obtain the precursor of LiNiₐT_{M(1-a)}O₂;
optionally, a pH of the reaction solution is 7-12;
optionally, a concentration of complex ions in the reaction solution is 0.1-1 mol/L;
optionally, the reaction is performed at a temperature of 40-60°C;
optionally, the reaction is performed until a particle size of the precursor is 3-10 µm.

16. The preparation method according to any one of claims 5-15, wherein the sintering in step (2) is performed at a temperature of 800-1000°C for a period of 24-48 h;
optionally, crushing and screening with magnetic impurities removed are further performed after the sintering in step (2);
optionally, a particle size D50 of the cathode material in step (2) is 2-5 µm, and a size of primary particles is within the range of 0.4-2 µm.

17. The preparation method according to any one of claims 5-16, which comprises the following steps:
(1) mixing a sol-gel solution of LiMn_{b}A_{(1-b)}PO₄, the precursor of LiNiₐT_{M(1-a)}O₂ and the lithium source by ball milling until a particle size D50 of the mixture is 0.2-1.5 µm, and subjecting the mixture to spray drying at 100-300°C to obtain the raw powder of the cathode material, wherein in the mixture, a molar ratio of lithium ions to T_{M} ions is (1.20-1.36):1 and a molar percentage of LiMn_{b}A_{(1-b)}PO₄ is 0.01-30%;
the precursor of LiNiₐT_{M(1-a)}O₂ is NiₐMn₍₁₋ₐ₎(OH)₂, and the sol-gel solution of LiMn_{b}A_{(1-b)}PO₄ is prepared by the following method:
mixing a lithium source, a manganese source, a phosphorus source, a metal A source and a solvent according to a formula amount to obtain a mixed solution with a concentration of 0.1-1 mol/L, then adding an acid and a chelating agent to the mixed solution and stirring to obtain the sol-gel solution of LiMn_{b}A_{(1-b)}PO₄; and
(2) subjecting the raw powder of the cathode material obtained in step (1) to sintering at a temperature of 800-1000°C, then crushing, and screening with magnetic impurities removed to obtain the cathode material with a particle size D50 of 2-5 µm and primary particles having a size distributed within the range of 0.4-2 µm.

18. A lithium-ion battery, which comprises the cathode material according to any one of claims 1-4.
